# EUROPÄISCHE PATENTANMELDUNG

(11) **EP 1 975 796 A2**
(43) Veröffentlichungstag der Anmeldung: **01.10.2008**
(21) Anmeldenummer: 08102676.7
(22) Anmeldetag: 17.03.2008
(51) Int. Cl.: G06F 11/07

(54) **Computersystem**

(30) Priorität: 29.03.2007 DE 102007015234
(71) Anmelder: Fujitsu Siemens Computers GmbH, 80807 München (DE)
(72) Erfinder: Siebert, Franz, 86157, Augsburg (DE)
(74) Vertreter: Epping - Hermann - Fischer

(57) **Zusammenfassung**

Die Erfindung betrifft ein Computersystem (1) mit einem Gehäuse. Das Computersystem (1) ist dadurch gekennzeichnet, dass am Gehäuse des Computersystems (1) ein RFID-Tag (4) als Typenleistungsschild angeordnet ist.

## Beschreibung

Die Erfindung betrifft ein Computersystem mit einem Gehäuse.

Computersysteme, beispielsweise Server, werden meist in einer großen Anzahl in einem Serverrack montiert. Die Ausstattung oder das Fabrikat der jeweiligen Server kann dabei unterschiedlich sein. Um die Server voneinander zu unterscheiden, werden diese bei der Herstellung jeweils mit einer Seriennummer versehen. Üblicherweise wird die Seriennummer als Nummernkette oder als Barcode auf ein Klebeetikett gedruckt und auf ein Gehäuse des Servers geklebt.

Die Vorderseite des Gehäuses des Servers ist frei zugänglich, wenn dieser im Serverrack montiert ist. Das Gehäuse des Servers ist üblicherweise 1 bis 3 Höheneinheiten hoch, wobei eine Höheneinheit 2,54 cm entspricht. An der Vorderseite sind üblicherweise CD-ROM oder DVD Laufwerke sowie Festplattenlaufwerke oder Diskettenlaufwerke, I/O Slots oder Anschlüsse des Servers angeordnet. Für das Klebeetikett ist somit an der Vorderseite wenig oder gar kein Platz vorhanden. Das Klebeetikett wird daher auf eine andere als die Vorderseite des Servers aufgeklebt. Zum Lesen der Seriennummer muss der Server ausgeschaltet und aus dem Serverrack ausgebaut werden.

Der Erfindung liegt daher die Aufgabe zugrunde, ein Computersystem anzugeben, dessen Seriennummer, Systemkomponenten, Systemstatus oder andere für das Computersystem spezifische Daten einfach und unabhängig vom Betriebszustand des Computersystems erfasst und weiterverarbeitet werden.

Die Aufgabe wird durch ein Computersystem mit einem Gehäuse gelöst, das dadurch gekennzeichnet ist, dass am Gehäuse ein RFID-Tag als Typenleistungsschild integriert ist, wobei der RFID-Tag einen Speicher aufweist. Das Computersystem umfasst eine Schnittstellenvorrichtung um Informationen vom Computersystem an den RFID-Tag zu leiten und die übermittelten Daten im Speicher des RFID-Tags zu speichern. Bei einem fehlerhaften Betrieb des Computersystems enthalten die übermittelten Daten dabei die bei dem fehlerhaften Betrieb ausgegebenen Fehlerinformationen.

Auf dem Typenleistungsschild sind spezifische Daten für das Computersystem gespeichert. Beispielsweise sind dies eine Seriennummer, eine Hardware- oder Softwareausstattung in einem Auslieferungszustand oder eine Anschlussleistung des Computersystems. Ebenso werden bei einer Fehlfunktion des Computersystems Fehlerdaten des Computersystems erfasst, die beispielsweise Daten aus dem BIOS/Fehlerspeicher umfassen. Da diese Daten auf dem RFID-Tag gespeichert sind, können sie von einem Benutzer durch einfaches Auslesen des RFID-Tags beispielsweise mit einem Lesegerät erfasst werden und sowohl zu Inventarisierungszwecken als auch zur Fehlerbehebung genutzt werden. Das Computersystem kann dabei ein- oder ausgeschaltet oder auch defekt sein. Der RFID-Tag kann ein passiver oder aktiver RFID-Tag sein. Der aktive RFID-Tag wird mit Strom versorgt, wobei die Stromversorgung vorzugsweise über das Computersystem erfolgt.

In einer bevorzugten Ausführungsform ist der RFID-Tag an einer Frontblende des Gehäuses des Computersystems angeordnet. Ist das Computersystem in einem Serverrack eingebaut, ist die Frontblende frei zugänglich. Dadurch ist der RFID-Tag leicht zugänglich und einfach auslesbar. Der RFID-Tag benötigt sehr wenig Platz, beispielsweise wenige Millimeter und kann somit an die Größe eines verbleibenden Platzes auf der Frontblende angepasst werden. Eine Vielzahl von spezifischen Daten des Computersystems kann auf dem RFID-Tag abgespeichert und mit dem Lesegerät einfach erfasst werden.

In einer weiteren vorteilhaften Ausführungsform weist das Computersystem einen Einschub zur Aufnahme des RFID-Tags auf. Vorteilhafterweise ist der Einschub in einem schmalen Schlitz an der Frontblende in dem Gehäuse angeordnet und kann aus dem Gehäuse heraus oder hinein geschoben werden. Günstigerweise ist der Einschub aus Kunststoff gefertigt. Der Einschub ist insbesondere für RFID-Tags mit großen Abmessungen geeignet. Die Größe des RFID-Tags hängt beispielsweise auch von der Reichweite ab, die der RFID-Tag aufweisen soll.

In einer weiteren vorteilhaften Ausführungsform weist das Gehäuse des Computersystems eine Aussparung im Bereich des RFID-Tags auf. Eine Metalloberfläche, auf die der RFID-Tag angeordnet ist, kann sich störend für das Auslesen des RFID-Tags auswirken. Durch die Aussparung im Bereich des RFID-Tags wird einer solchen möglichen Störung beim Auslesen des RFID-Tags vorgebeugt.

Vorteilhafterweise ist das Gehäuse des Computersystems in einem Bereich des RFID-Tags aus Kunststoff gefertigt. Dadurch wird einer möglichen Störung beim Auslesen des RFID-Tags vorgebeugt.

In einer weiteren vorteilhaften Ausführungsform weist das Computersystem im Bereich des RFID-Tags eine von diesem beabstandete Metallabschirmung innerhalb des Computersystems auf. Dadurch wird eine elektromagnetische Verträglichkeit (EMV) des Computersystems gewährleistet.

Vorteilhafterweise werden Daten bei der Herstellung des Computersystems auf dem RFID-Tag als Typenleistungsschild gespeichert. Der RFID-Tag kann beispielsweise mit Daten vom Auslieferungszustand des Computersystems gleich nach dessen Endmontage beschrieben werden. Auch einem Käufer des Computersystems stehen diese Daten auf dem RFID-Tag sofort zur Verfügung, ohne dass das Computersystem eingeschaltet oder ausgepackt werden muss.

In einer weiteren vorteilhaften Ausführungsform weist das Computersystem eine Vorrichtung zum induktiven Beschreiben des RFID-Tags auf. Über eine induktive Kopplung wird der RFID-Tag von der Vorrichtung beschrieben. Der Vorteil besteht darin, dass die Energiezufuhr für den RFID-Tag kabellos über ein HF-Feld der Vorrichtung erfolgt. Der RFID-Tag ist über die Vorrichtung zum induktiven Beschreiben und auch von außerhalb des Computersystems mit einem Lese/Schreibgerät beschreibbar.

Weitere Einzelheiten und Ausgestaltungen der Erfindung sind in den Unteransprüchen angegeben.

Die Erfindung wird nachfolgend an Ausführungsbeispielen anhand der Zeichnungen näher erläutert.

In den Zeichnungen zeigen:
- Figur 1: ein erstes Ausführungsbeispiel eines Computersystems mit einem RFID-Tag,
- Figur 2: ein zweites Ausführungsbeispiel des Computersystems mit dem von einem Lese/Schreibgerät beschreibbaren RFID-Tag,
- Figur 3: ein drittes Ausführungsbeispiel des Computersystems mit einer Schnittstellenvorrichtung und dem RFID-Tag,
- Figur 4: ein viertes Ausführungsbeispiel des Computersystems mit einer Schnittstellenvorrichtung und dem vom Lese/Schreibgerät beschreibbaren RFID-Tag und
- Figur 5: ein fünftes Ausführungsbeispiel des Computersystems mit einer Vorrichtung zum induktiven Beschreiben des RFID-Tags.

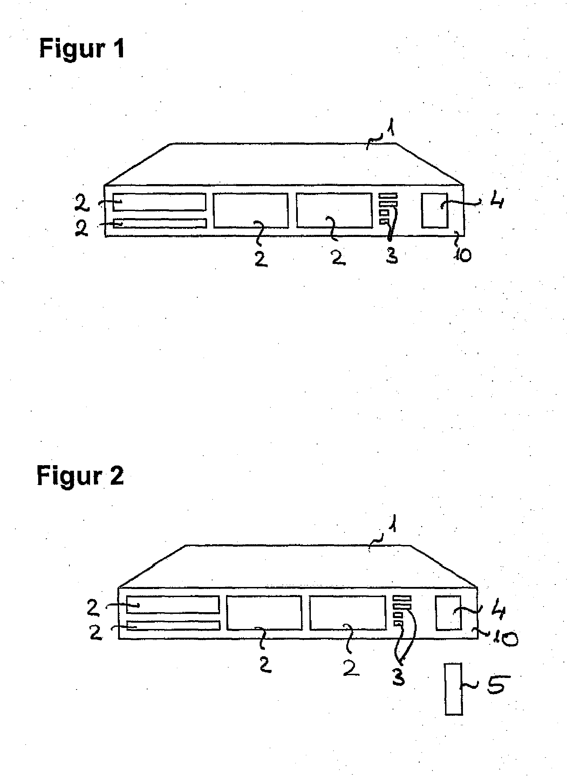

Figur 1 zeigt in einem ersten Ausführungsbeispiel ein Computersystem 1. Das Computersystem 1 weist eine Frontblende 10, eine Vielzahl von Laufwerken 2, Anschlüsse 3 und einen RFID-Tag 4 auf. Zum besseren Verständnis der Zeichnung ist der RFID-Tag 4 stark vergrößert dargestellt.

Die Laufwerke 2 befinden sich in Einschüben des Computersystems 1 und sind über Aussparungen in der Frontblende 10 des Computersystems 1 zugänglich. Die Laufwerke 2 sind beispielsweise ein CD-ROM Laufwerk, ein DVD Laufwerk, ein Diskettenlaufwerk oder Festplattenlaufwerke. Die Anschlüsse 3 sind beispielsweise als PCI Schnittstelle ausgebildet oder zum Anschluss an ein Computernetzwerk vorgesehen.

Das Computersystem 1 ist beispielsweise ein Primergy RX100 von Fujitsu Siemens und weist eine Höhe von einer Höheneinheit, auch als U1 bekannt, auf.

Der RFID-Tag 4 ist als Typenleistungsschild ausgebildet und ist auf der Frontblende 10 angeordnet. Bei der Herstellung des Computersystems 1 werden spezifische Daten des Computersystems 1 auf dem RFID-Tag 4 gespeichert. Beispielsweise sind dies ein Fertigungsdatum, eine Seriennummer, ein Gerätetyp und eine Hardwareausstattung. Die Hardwareausstattung umfasst beispielsweise einen Typ und eine Leistung eines Prozessors des Computersystems 1, eine Speicherausstattung und falls vorhanden Art und Anzahl von Erweiterungskarten.

Diese spezifischen Daten des Computersystems 1 können mit einem Lesegerät, auch Scanner genannt, einfach erfasst werden. Der RFID-Tag 4 als Typenleistungsschild ist in diesem Ausführungsbeispiel unveränderlich. Der RFID-Tag 4 ist als passiver RFID-Tag 4 ausgebildet mit einer Reichweite von ungefähr 1 cm.

Je nach Bauart und Bauform ist es möglich, RFID-Tags 4 mit größerer Reichweite an der Frontblende 10 anzuordnen. Es ist möglich, einen RFID-Tag 4 mit größeren Abmaßen in einem Einschub aus Kunststoff im Computersystem 1 anzuordnen. Zum Auslesen oder Beschreiben wird der Einschub aus dem Computergehäuse herausgezogen.

Im Bereich des RFID-Tags 4 ist ein Gehäuse des Computersystems 1 aus Kunststoff gebildet, sodass ein Auslesen des RFID-Tags 4 störungsfrei möglich ist und nicht durch eine Metalloberfläche beeinträchtigt wird.

Das Gehäuse des Computersystems 1 weist im Bereich des RFID-Tags 1 eine von diesem beabstandete Metallabschirmung innerhalb des Computersystems 1 auf. Damit ist ein störungsfreies Auslesen oder Beschreiben des RFID-Tags 4 ermöglicht und zugleich ist die EMV des Computersystems 1 gewährleistet.

Es ist möglich, im Gehäuse des Computersystems 1 eine Aussparung im Bereich des RFID-Tags 4 vorzusehen, sodass ein Gehäuse aus Metall das Auslesen des RFID-Tags 4 nicht beeinträchtigt. Da der RFID-Tag 4 vorzugsweise geringe Abmessungen hat, ist die Aussparung klein und beeinträchtigt die EMV des Computersystems 1 nicht.

Figur 2 zeigt in einem zweiten Ausführungsbeispiel das Computersystem mit dem RFID-Tag 4, der von einem Lese/Schreibgerät 5 beschreibbar ist.

In diesem Ausführungsbeispiel weist der RFID-Tag 4 einen beschreibbaren Transponder auf. Beispielsweise ist dann der Speicher des RFID-Tags 4 ein EEPROM ("electrically erasable programmable memory") oder ein FRAM (ferromagnetic random access memory") mit einer Speicherkapazität von 64 Byte bis 32 kByte. Der RFID-Tag 4 beziehungsweise dessen Speicher wird in diesem Ausführungsbeispiel über eine induktive Kopplung von dem Lese/Schreibgerät 5 beschrieben. Über die induktive Kopplung wird der RFID-Tag 4 vom Lese/Schreibgerät 5 auch mit Strom versorgt.

Mit dem Lese/Schreibgerät 5 wird beispielsweise der RFID-Tag 4 editiert und eine Inventarnummer im Speicher des RFID-Tags 4 gespeichert. Die Inventarnummer wird von einem Benutzer vergeben. Es ist auch möglich, einen Namen für das Computersystem 1 oder einen Kommentar des Benutzers auf dem RFID-Tag 4 beziehungsweise in dessen Speicher zu speichern.

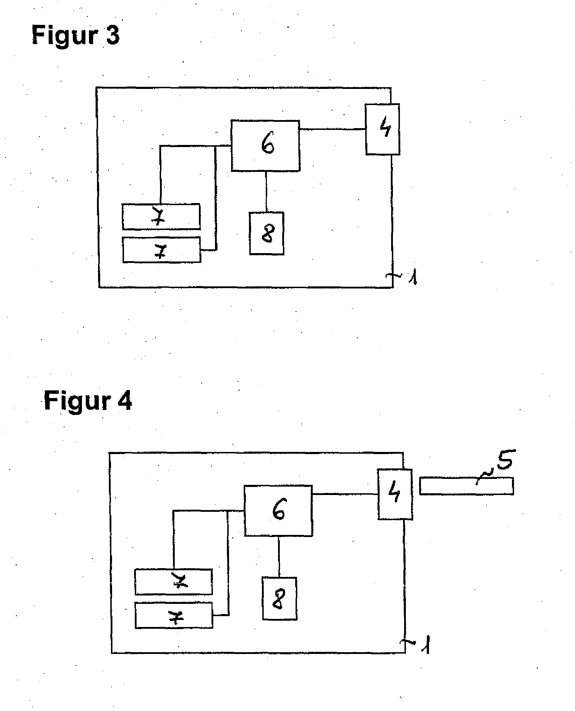

Figur 3 zeigt in einem dritten Ausführungsbeispiel in einer vereinfachten Zeichnung das Computersystem 1 mit einer Schnittstellenvorrichtung 6 und dem RFID-Tag 4. Der RFID-Tag 4 ist von innerhalb des Computersystems 1 beschreibbar und von außerhalb des Computersystems 1 auslesbar. Dies wird in Figur 3 mit einem schematischen RFID-Tag 4 dargestellt, der sich zumindest teilweise außerhalb des Computersystems 1 befindet.

Das Computersystem 1 weist Hardwarekomponenten 7 und einen BIOS-Speicher 8 für das BIOS des Computersystems 1 auf. Weitere vorhandene elektronische Komponenten des Computersystems 1 werden in der Zeichnung nicht dargestellt.

Die Schnittstellenvorrichtung 6 ist mit den Hardwarekomponenten 7 und dem BIOS-Speicher 8 verbunden und weist eine elektrische Verbindung zum RFID-Tag 4 auf. Über die Schnittstellenvorrichtung 6 ist es möglich, die aktuelle Hardwareausstattung des Computersystems 1 zu erfassen, an den RFID-Tag 4 weiterzuleiten und in dem Speicher des RFID-Tags 4 zu speichern. Dies wird mit einem so genannten RFID-Schreiben über die Schnittstellenvorrichtung 6 ausgeführt. Daten über die Software, Systeminformationen oder das Betriebssystem werden auch über die Schnittstellenvorrichtung 6 im Speicher der RFID-Tags 4 gespeichert. Diese spezifischen Daten können beispielsweise beim Start oder auch während des Betriebs des Computersystems 1 auf dem RFID-Tag gespeichert werden.

Bei einem fehlerhaften Betrieb des Computersystems 1 werden Fehlermeldungen oder gegebenenfalls Informationen zum Beseitigen von Fehlern im BIOS-Speicher 8 oder in einem Fehlerspeicher des Computersystems 1 gespeichert. Die Fehlermeldungen und die Informationen zu ihrer Beseitigung werden über die Schnittstellenvorrichtung 6 im Speicher des RFID-Tags 4 gespeichert.

Ist das Computersystem 1 defekt und kann beispielsweise nicht eingeschaltet werden, ist es trotzdem möglich, die Fehlermeldungen aus dem RFID-Tag 4 auszulesen und die Fehler gegebenenfalls zu beheben. Auch bei einem Stromausfall bleiben die spezifischen Daten des Computersystems 1 auf dem RFID-Tag 4 gespeichert.

Beim Beschreiben des RFID-Tags 4 wird zum einen Energie benötigt und zum anderen strahlen die Kabel, über die die elektrische Verbindung zwischen Schnittstellenvorrichtung 6 und RFID-Tag 4 hergestellt wird, Strahlung ab. Bei einer solchen drahtgebundenen Schnittstellenvorrichtung 6 sollte darauf geachtet werden, dass die EMV des Computersystems 1 gewährleistet bleibt.

Es ist möglich, passive oder aktive RFID-Tags 4 zu benutzen. Aktive RFID-Tags 4 müssen mit Strom versorgt werden. Ein RFID-Tag 4 mit einer Batterie als Stromversorgung ist ungeeignet, da die Batterie eine endliche Stromversorgung ist und nach einiger Zeit ausgetauscht werden muss. Die Stromversorgung für den RFID-Tag 4 erfolgt daher über das Computersystem 1.

Figur 4 zeigt in einem vierten Ausführungsbeispiel das Computersystem 1 mit der Schnittstellenvorrichtung 6 und dem vom Lese/Schreibgerät 5 beschreibbaren RFID-Tag 4. In diesem Ausführungsbeispiel ist der RFID-Tag 4 vom Computersystem 1 sowie von außerhalb über das Lese/Schreibgerät 5 beschreibbar und/oder auslesbar. Es ist möglich, Daten mit dem Lese/Schreibgerät 5 in den Speicher des RFID-Tags 4 zu speichern und diese zur weiteren Verarbeitung im Computersystem 1 über die Schnittstellenvorrichtung 6 auszulesen.

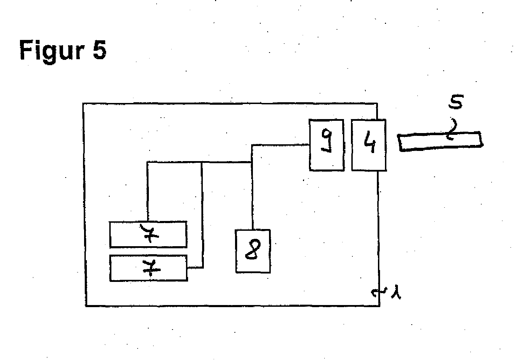

Figur 5 zeigt in einem fünften Ausführungsbeispiel das Computersystem 1, wobei das Computersystem 1 eine Vorrichtung 9 zum induktiven Beschreiben des RFID-Tags 4 aufweist.

Über die Vorrichtung 9 wird der RFID-Tag 4 drahtlos vom Computersystem 1 aus beschrieben. Der RFID-Tag 4 weist den beschreibbaren Transponder mit beispielsweise dem EEPROM auf.

Der Vorteil der Vorrichtung 9 zum induktiven Beschreiben des RFID-Tags 4 ist die induktive Kopplung zwischen RFID-Tag 4 und Vorrichtung 9, sodass eine drahtlose Schnittstelle zum Beschreiben des RFID-Tags 4 gebildet ist. Des Weiteren ist damit auch eine drahtlose Stromversorgung für den RFID-Tag 4 vorhanden.

Zum Beschreiben des RFID-Tags 4 mit spezifischen Daten des Computersystems 1, wie beispielsweise der Hardwareausstattung, der Softwareausstattung oder gegebenenfalls Fehlermeldungen aus dem BIOS-Speicher 8 ist eine hohe Sendeleistung nötig. Um das Computersystem 1 gegen diese Strahlung abzuschirmen sollte das Beschreiben des RFID-Tags 4 dann erfolgen, wenn dies für das Computersystem 1 unkritisch ist.

Der RFID-Tag 4 wird mit dem Lese/Schreibgerät 5 ausgelesen. Es ist möglich, über das Lese/Schreibgerät 5 Informationen im Speicher des RFID-Tags 4 zu speichern und über die Vorrichtung 9 zur weiteren Verarbeitung im Computersystem 1 auszulesen.

Weitere Ausführungsbeispiele der Erfindung werden hier nicht weiter erläutert, sind aber von der Erfindung umfasst.

### Bezugszeichenliste

- 1: Computersystem
- 2: Laufwerk
- 3: Anschluss
- 4: RFID-Tag
- 5: Lese/Schreibgerät
- 6: Schnittstellenvorrichtung
- 7: Hardwarekomponenten
- 8: BIOS-Speicher
- 9: Vorrichtung zum induktiven Beschreiben
- 10: Frontblende

## Patentansprüche

1. Computersystem (1) mit einem Gehäuse,
**dadurch gekennzeichnet, dass**
- am Gehäuse des Computersystems (1) ein RFID-Tag (4) als Typenleistungsschild integriert ist, wobei der RFID-Tag (4) einen Speicher aufweist,
- das Computersystem (1) eine Schnittstellenvorrichtung (6) aufweist, die dazu eingerichtet ist, Informationen vom Computersystem (1) an den RFID-Tag (4) weiterzuleiten und die Daten im Speicher des RFID-Tags (4) zu speichern, wobei bei einem fehlerhaften Betrieb des Computersystems (1) diese Daten die bei dem fehlerhaften Betrieb ausgegeben Fehlerinformationen enthalten.

2. Computersystem (1) nach Anspruch 1,
**dadurch gekennzeichnet, dass** der Speicher auf dem RFID-Tag (4) zum Inventarisieren des Computersystems (1) über ein Lese/Schreibgerät (5) von außerhalb des Computersystems (1) beschreibbar ist.

3. Computersystem (1) nach einem den Ansprüche 1 oder 2,
**dadurch gekennzeichnet, dass** die Daten im Speicher des RFID-Tags (4) von dem Lese/Schreibgerät (5) von außerhalb des Computersystems (1) auslesbar sind.

4. Computersystem (1) nach einem der Ansprüche 1 bis 3,
**dadurch gekennzeichnet, dass** der RFID-Tag (4) an einer Frontblende (10) des Gehäuses des Computersystems (1) angeordnet ist.

5. Computersystem (1) nach einem der Ansprüche 1 bis 4,
**dadurch gekennzeichnet, dass** das Computersystem (1) einen Einschub aufweist zur Aufnahme des RFID-Tags (4).

6. Computersystem (1) nach einem der vorigen Ansprüche,
**dadurch gekennzeichnet, dass**
das Gehäuse des Computersystems (1) in
einem Bereich des RFID-Tags (4) eine Aussparung aufweist.

7. Computersystem (1) nach einem Ansprüche 1 bis 5,
**dadurch gekennzeichnet, dass**
das Gehäuse des Computersystems (1) in einem Bereich des RFID-Tags (4) aus Kunststoff gefertigt ist.

8. Computersystem (1) nach Anspruch 6 oder 7,
**dadurch gekennzeichnet, dass**
das Computersystem (1) im Bereich des RFID-Tags (4) eine von diesem beabstandete Metallabschirmung aufweist.

9. Computersystem (1) nach einem der vorigen Ansprüche,
**dadurch gekennzeichnet, dass**
bei einer Herstellung des Computersystems (1), Daten auf den RFID-Tag (4) als Typenleistungsschild gespeichert werden.

10. Computersystem (1) nach einem der vorigen Ansprüche,
**dadurch gekennzeichnet, dass**
der RFID-Tag (4) eine Stromversorgung über das Computersystem (1) aufweist.

11. Computersystem (1) nach einem der Ansprüche 1 bis 3,
**dadurch gekennzeichnet, dass**
das Computersystem (1) eine Vorrichtung (9) zum induktiven Beschreiben des RFID-Tags (4) aufweist.

12. Computersystem (1) nach Anspruch 11,
**dadurch gekennzeichnet, dass**
Daten vom Computersystem (1) über die Vorrichtung (9) auf den Speicher des RFID-Tags (4) gespeichert werden.

13. Computersystem (1) nach einem der vorigen Ansprüche,
**dadurch gekennzeichnet, dass**
das Computersystem (1) ein Server in einem Serverrack ist.
